# EUROPÄISCHE PATENTANMELDUNG

(11) **EP 2 073 182 A2**
(43) Veröffentlichungstag der Anmeldung: **24.06.2009**
(21) Anmeldenummer: 08172146.6
(22) Anmeldetag: 18.12.2008
(51) Int. Cl.: G08C 17/02

(54) **Anordnung, System und Verfahren zur drahtlosen Steuerung eines Gerätes**

(30) Priorität: 18.12.2007 DE 102007060810
(71) Anmelder: MAQUET GmbH & Co. KG, 76437 Rastatt (DE)
(72) Erfinder: Brühn, Alfred, 76187 Karlsruhe (DE)
(74) Vertreter: Schaumburg, Thoenes, Thurn, Landskron, Eckert

(57) **Zusammenfassung**

Die Erfindung betrifft eine Anordnung, ein System sowie Verfahren zur drahtlosen Steuerung eines Gerätes, bei denen jeweils eine Vorrichtung (10) mit mindestens einem Transponder (40a bis 40m) und mit mindestens einem dem Transponder (40a bis 40m) zugeordneten Betätigungselement (12 bis 36), dem eine Steuerfunktion des Gerätes zugeordnet ist, genutzt wird, um die Steuerfunktion des Gerätes zu aktivieren und/oder zu deaktivieren.

## Beschreibung

Die Erfindung betrifft eine Anordnung, ein System und ein Verfahren zur drahtlosen Steuerung eines Gerätes, insbesondere zur drahtlosen Steuerung eines medizinischen Gerätes. Durch die drahtlose Steuerung kann insbesondere ein elektronisch gesteuerter, motorisch angetriebener, aus mindestens einem Funktionsmodul bestehender Operationstisch ferngesteuert und fernbedient werden. Viele medizinischen Apparate und Geräte erfordern bei ihrer Handhabung Bedienhandlungen von Bedienpersonen, die über eine entsprechende Mensch-Maschine-Schnittstelle (MMI-Mensch-Maschine-Interface) initiiert werden können. Zur einfacheren Bedienung, beispielsweise während eines Behandlungsablaufes, wie einer Operation in einem Operationssaal, kann es vorteilhaft sein, die Mensch-Maschine-Schnittstelle zusätzlich zu einer weiteren fest mit dem jeweiligen medizinischen Gerät oder Apparat verbundenen Mensch-Maschine-Schnittstelle oder als alleinige Mensch-Maschine-Schnittstelle in Form eines Handgerätes, vorzugsweise einer Fernbedienung, vorzusehen. Mit Hilfe einer Fernbedienung kann die Bedienung des jeweiligen medizinischen Gerätes von einer vom Gerät entfernten Position erfolgen. Bei drahtgebundenen Fernbedienungen kann ein für eine Bedienfunktion erforderliches Betätigungselement in den Strompfad eines entsprechenden Aktuators eingebunden werden. Abhängig von den bereitzustellenden Bedienfunktionen sind bei einer drahtgebundenen Fernbedienung eine Vielzahl von Signalleitungen zwischen dem Gerät und der abgesetzten Bedieneinheit vorzusehen.

Zur Fernbedienung eines Gerätes sind ferner drahtlose Fernbedienungen bekannt, mit deren Hilfe Geräte gesteuert werden können. Solche Fernbedienungen erfordern im Allgemeinen eine eigene Energieversorgung, beispielsweise durch in der Fernbedienung angeordnete Batterien oder Akkumulatoren. Mit Hilfe solcher Fernbedienungen erfolgt im Allgemeinen ein Datenaustausch zwischen der Fernbedienung und einer mit einer Steuereinheit des Gerätes verbundenen Empfangseinheit.

Aus dem Dokument US 2006/020267737 A1 ist eine Fernbedienung mit einem RFID-Tag bekannt, der über einen Aktivierungsschalter aktivierbar ist, sodass die Kommunikation mit diesem RFID-Tag nur im betätigten Zustand des Aktivierungsschalters möglich ist. Ein nicht beabsichtigtes Auslesen des RFID-Tags wird dadurch verhindert. Mit Hilfe dieser Fernbedienung kann eine Identitätsüberprüfung einer Person durchgeführt werden. Jedoch ist aus diesem Dokument nicht bekannt, unmittelbar eine Steuerfunktion zum Steuern eines Gerätes beim Betätigen eines Schalters auszuführen.

Aufgabe der Erfindung ist es, eine Anordnung, ein System und ein Verfahren zur drahtlosen Steuerung eines Gerätes anzugeben, durch die die drahtlose Steuerung des zu steuernden Gerätes einfach und sicher bewirkt werden kann.

Diese Aufgabe wird für eine Anordnung, ein System und ein Verfahren durch die Gegenstände der jeweiligen unabhängigen Patentansprüche gelöst. Vorteilhafte Weiterbildungen der Erfindung sind in den abhängigen Patentansprüchen angegeben.

Durch eine Anordnung zur drahtlosen Steuerung eines Gerätes wird erreicht, dass eine Steuerfunktion zum Steuern des Gerätes durch eine Betätigung des Betätigungselements ausgelöst werden kann, indem der Transponder entsprechende Daten zu einer entfernt angeordneten mit einer Steuereinheit des Gerätes verbundenen oder in diese Steuereinheit integrierten Kommunikationseinheit überträgt, sodass die Steuerfunktion zum Steuern des Gerätes ausgeführt werden kann.

Besonders vorteilhaft ist es, wenn die Anordnung zur drahtlosen Steuerung eines medizinischen Gerätes dient. Als medizinische Geräte werden erfindungsgemäß vorzugsweise auch medizinische Apparate angesehen. Vorzugsweise ist das medizinische Gerät ein Operationstisch. Als Betätigungselement kann vorzugsweise ein Schaltelement, beispielsweise ein Taster oder ein Reedkontakt vorgesehen sein. Die Vorrichtung ist vorzugsweise eine Fernbedienung.

Als Transponder eignen sich insbesondere passive, halbaktive oder aktive Transponder. Diese können insbesondere als passive, halbaktive oder aktive RFID-Tags ausgeführt werden. Die Energieversorgung der Transponder zumindest mit der zur Kommunikation mit einer Kommunikationseinheit erforderlichen Energie kann jeweils über eine drahtlose Kopplung mit einer Energieversorgungseinheit erfolgen, wobei die Energieversorgungseinheit vorzugsweise Bestandteil der Kommunikationseinheit ist. Dadurch wird die zum Betrieb des Transponders erforderliche Energie diesem drahtlos zugeführt. Die drahtlose Kommunikation zwischen jedem zur Fernbedienung genutzten Transponder und mindestens einer Kommunikationseinheit erfolgt vorzugsweise im UHF-Übertragungsband. Zumindest die von den Transpondern zur Kommunikationseinheit übertragenen Daten sind verschlüsselt, vorzugsweise mit Hilfe eines geeigneten Kryptographieverfahrens. Die Vorrichtung ist vorzugsweise ein Handsender zur drahtlosen Steuerung des medizinischen Gerätes, vorzugsweise eine drahtlose Fernbedienung oder Fernsteuerung.

Die Steuerfunktion, die durch das Betätigen eines der Betätigungselemente ausgelöst wird, bewirkt insbesondere das Aktivieren und/oder Deaktivieren eines Antriebs, insbesondere eines Verstellantriebs und/oder eines Antriebs für ein Verriegelungselement.

Vorteilhaft ist es, den Empfangskreis mindestens eines Transponders in einer Schaltstellung des Betätigungselements kurzzuschließen, wobei eine Energieversorgungseinheit zumindest die zur Kommunikation mit mindestens einer Kommunikationseinheit von dem Transponder benötigte Energie elektrisch, induktiv und/oder elektromagnetisch zu dem Empfangskreis überträgt. Durch das Kurzschließen des Empfangskreises mindestens eines Transponders kann ermittelt werden, ob im Kommunikationsbereich der Kommunikationseinheit mindestens ein Transponder einen kurzgeschlossenen Empfangskreis hat. Dies kann beispielsweise durch eine Analyse der von der Energieversorgungseinheit zu den Transpondern übertragenen Energie ermittelt werden.

Die erfindungsgemäße Vorrichtung enthält vorzugsweise keine austauschbare Batterie und keinen aufladbaren Akkumulator, sodass der Wartungsaufwand zum Austausch der Batterien und zum Aufladen der Akkumulatoren entfällt. Ferner ist die Anordnung einfach und kostengünstig herstellbar und die unterbrechungsfreie Funktion ist aufgrund der nicht erforderlichen zusätzlichen in die Anordnung zu integrierenden Energiequellen sichergestellt.

Als Transponder eignen sich insbesondere Mehrkanaltransponder, die wahlweise über einen der zur Verfügung stehenden Kommunikationskanäle mit mindestens einer Kommunikationseinheit kommunizieren. Dadurch kann eine Kommunikation mit mehreren Transpondern gleichzeitig erfolgen, ohne dass dadurch die jeweilige Kommunikation durch die Kommunikation der weiteren Transponder mit der Kommunikationseinheit beeinträchtigt oder verhindert wird. Kollisionen bei der Kommunikation der Transponder mit der Kommunikationseinheit werden somit vermieden.

Die erfindungsgemäßen Verfahren sowie das System können vorteilhaft auch dadurch weitergebildet werden, dass ein Antikollisionsverfahren zur Kommunikation zwischen der mindestens einen Kommunikationseinheit und den mindestens zwei Transpondern verwendet wird. Durch das Antikollisionsverfahren wird jedem Transponder vorzugsweise ein Zeitbereich, insbesondere ein Zeitschlitz, zur Kommunikation mit der Kommunikationseinheit zugeordnet. Auch ist es bei dem erfindungsgemäßen Verfahren und dem erfindungsgemäßen System vorteilhaft, wenn die Position mindestens eines Transponders und/oder der Vorrichtung zweidimensional oder dreidimensional im Raum relativ zu den Kommunikationseinheiten und/oder zum Gerät bestimmt wird. Auch ist es vorteilhaft, eine mehrfach symmetrische kryptografische Verschlüsselung zwischen dem jeweiligen Transponder und der Kommunikationseinheit übertragenen Daten durchzuführen. Dadurch wird eine sichere Datenübertragung ermöglicht und Manipulationen werden verhindert.

Besonders vorteilhaft ist es, wenn die Energie durch induktive Kopplung, kapazitive Kopplung und/oder elektromagnetische Wellen von einer Energieversorgungseinheit zum jeweiligen Transponder übertragen wird. Ferner ist es vorteilhaft, wenn die Kommunikationseinheit wiederholt Daten sendet, durch die die Transponder aufgefordert werden, Daten an die Kommunikationseinheit zu übertragen, vorzugsweise in einem festen Zeitabstand nach dem Empfang der von der Kommunikationseinheit gesendeten Daten. Besonders vorteilhaft ist es, wenn die Steuereinheit beim Betätigen des Betätigungselements nur aktiviert wird, wenn die ermittelte Position des Transponders in einem vorgegebenen Bereich liegt, vorzugsweise wenn der Transponder einen geringen Abstand zu mindestens einer Kommunikationseinheit und/oder zum Gerät hat als ein voreingestellter Maximalabstand. Dabei kann der Abstand richtungsabhängig ermittelt werden und/oder der voreingestellte Maximalabstand richtungsabhängig festgelegt werden.

Es wird ausdrücklich darauf hingewiesen, dass auch die in den unabhängigen Ansprüchen angegebenen Verfahren und das angegebene System mit Merkmalen einzelner abhängiger Anordnungsansprüche bzw. entsprechenden Verfahrens- oder Systemmerkmalen und/oder weiteren in der Beschreibung im Zusammenhang mit einer der erfindungsgemäßen Anordnungen oder erfindungsgemäßen Verfahren angegebenen Merkmalen jeweils weitergebildet werden können.

Weitere Merkmale und Vorteile der Erfindung ergeben sich aus der folgenden Beschreibung, welche in Verbindung mit den beigefügten Figuren die Erfindung anhand eines Ausführungsbeispiels erläutert.

Es zeigen:
- Figur 1: eine schematische Darstellung der Draufsicht einer erfindungsgemäßen Fernbedienung mit insgesamt 14 Betätigungselementen;
- Figur 2: ein Blockschaltbild einer Transpondereinheit zur Verwendung in der Fernbedienung nach Figur 1; und
- Figur 3: eine schematische Darstellung der in der Fernbedienung nach Figur 1 angeordneten Transpondereinheiten.

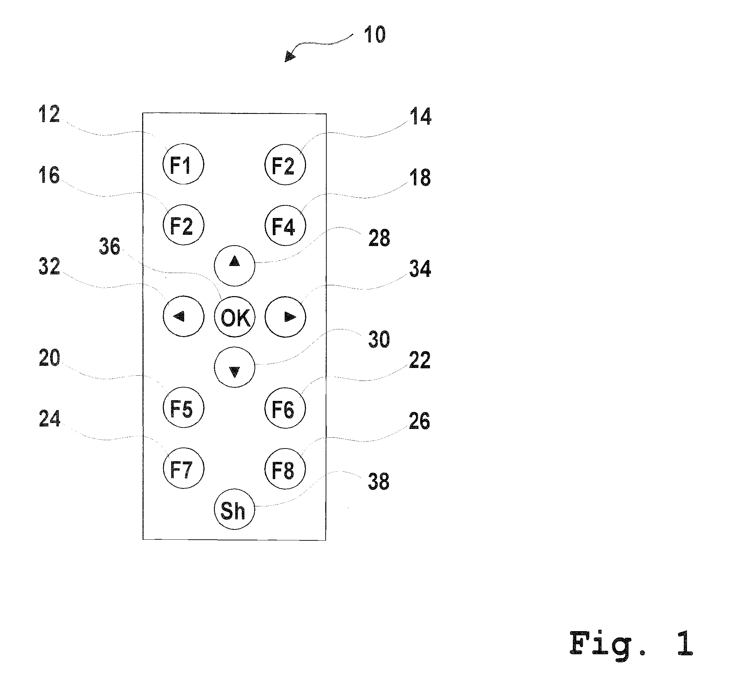

In Figur 1 ist eine Draufsicht auf eine Fernbedienung 10 dargestellt, die insgesamt 14 Betätigungselemente 12 bis 38 aufweist. Die Betätigungselemente 12 bis 38 sind als Drucktaster ausgeführt, die jeweils mit einer Transpondereinheit verbunden sind und diese Transpondereinheit bei einer Betätigung des Tasters aktivieren, deaktivieren und/oder die gesendete Information der Transpondereinheit beeinflussen. Die Betätigungselemente 12 bis 26 sind speziellen Bedienfunktionen F1 bis F8 eines Operationstisches zugeordnet. Mit Hilfe dieser Bedienfunktionen sind beispielsweise zu bedienende Segmente des Operationstisches auswählbar, die dann mit Hilfe der Betätigungselemente 28 bis 34 verfahren werden können. Eine Auswahl und/oder eine Verstellung kann beispielsweise mit Hilfe des Betätigungselements 36 bestätigt werden. Zur Aktivierung weiterer Funktionen ist ein Betätigungselement 38 vorgesehen, das als Hochstelltaste dient und mit dessen Hilfe jeweils eine weitere den Betätigungselementen 12 bis 26 jeweils hinterlegte Steuerfunktion aktiviert werden kann. Alternativ oder zusätzlich kann die Hochstelltaste 38 dazu genutzt werden, um die Steuerfunktion der Betätigungselemente 12 bis 36 überhaupt zu aktivieren, wobei dann zum Aktivieren die den Betätigungselementen 12 bis 36 zugeordnete Steuerfunktion erst aktiviert wird, wenn das jeweilige Betätigungselement 12 bis 36 und das Betätigungselement 38 gleichzeitig aktiviert sind. Dadurch kann eine unbeabsichtigte Bedienhandlung durch unbeabsichtigtes Drücken eines der Betätigungselemente 12 bis 36 vermieden werden. Die zusätzliche Betätigung der Steuerfunktion mit Hilfe des Betätigungselements 38 kann auch nur für ein weiteres Betätigungselement 12 bis 36 oder für einen Teil der Betätigungselemente 12 bis 36 vorgesehen sein und/oder von weiteren Signalen und/oder Informationen abhängig gemacht werden.

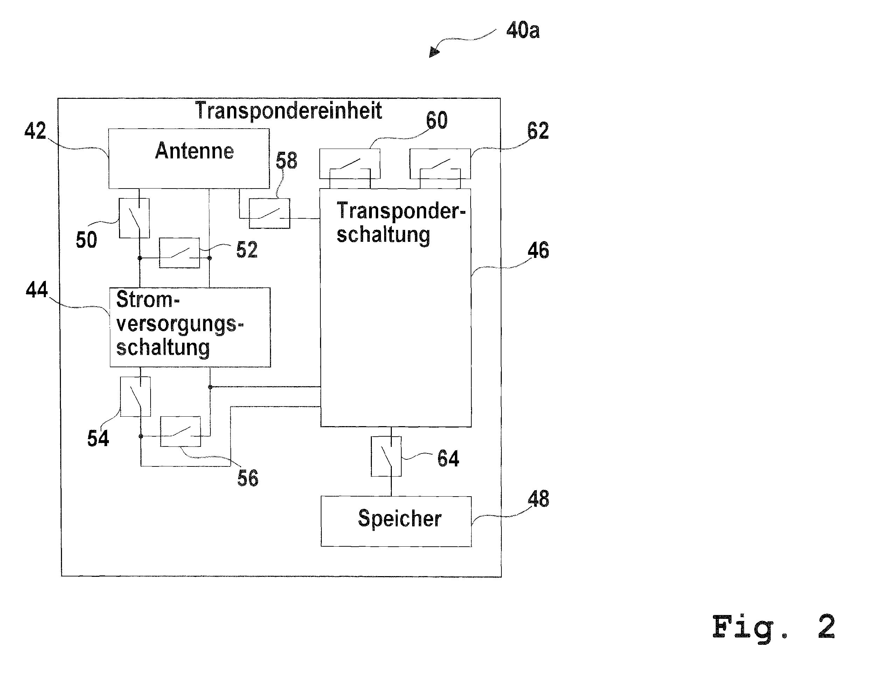

In Figur 2 ist eine Transpondereinheit 40a dargestellt, die eine durch einen Empfangskreis 42 gebildete Antenne, eine Stromversorgungsschaltung, eine Transponderschaltung 46 und einen Speicher 48 umfasst. Der Empfangskreis 42 ist nach Art einer Spule, vorzugsweise als gedruckte Schaltung, ausgeführt, deren Wicklungsenden elektrisch mit der Stromversorgungsschaltung 44 über das Schaltelement 50 verbunden sind. Mit Hilfe des Schaltelements 50 kann der Stromkreis zwischen der Stromversorgungsschaltung 44 und dem Empfangskreis 42 kurzgeschlossen werden. Mit Hilfe des Schaltelements 52 kann der Empfangskreis 42 geschlossen werden. Zur Datenübertragung ist der Empfangskreis 42 der Antenne mit der Transponderschaltung 46 elektrisch über das Schaltelement 58 verbindbar. Die Stromversorgungsschaltung 44 ist elektrisch mit der Transponderschaltung 46 über das Schaltelement 54 verbindbar. Ferner ist die Stromversorgungsschaltung 44 mit Hilfe des Schaltelements 56 kurzschließbar. Signaleingänge der Transponderschaltung 46 sind mit den Schaltelementen 60, 62 elektrisch verbunden, sodass die Transponderschaltung 46 die Schaltzustände dieser Schaltelemente 60, 62 erfassen kann. Ferner ist die Transponderschaltung 46 über eine Signalleitung mit dem Speicher 48 über ein Schaltelement 64 verbunden. Zum Bereitstellen der Schaltfunktion eines Betätigungselements ist nur eines der Schaltelemente 50 bis 64 erforderlich. Jedoch können auch mehr als ein Schaltelement 50 bis 64 bei der Transpondereinheit 40a vorgesehen werden, wodurch mehrere unterschiedliche Steuerfunktionen durch unterschiedliche von der Transpondereinheit 40a als Antwort ausgesendete Informationen bzw. Daten mit entsprechenden Informationen ausgeführt werden können.

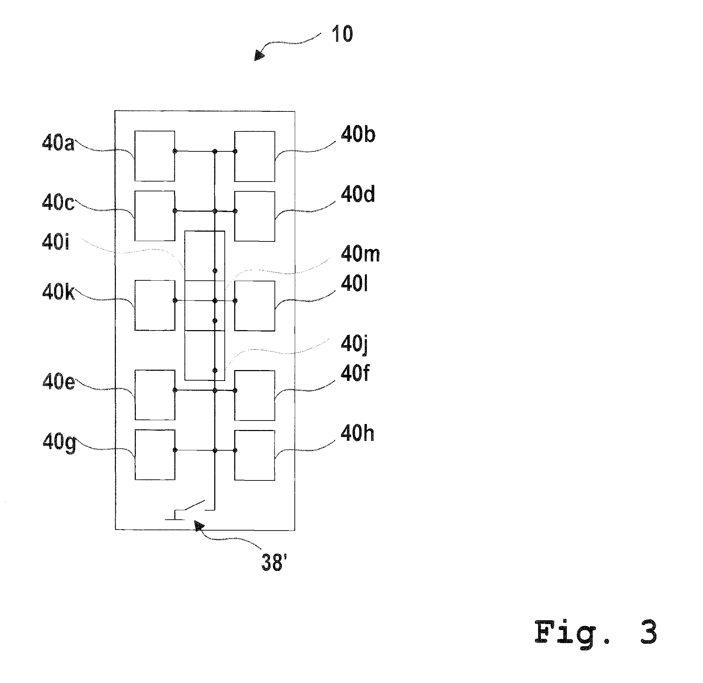

In Figur 3 ist die Fernbedienung 10 nach Figur 1 dargestellt, wobei die in Figur 1 gezeigte Oberschale der Fernbedienung entfernt und die innerhalb des Gehäuses der Fernbedienung 10 angeordneten Transpondereinheiten 40a bis 40m gezeigt sind. Jede der Transpondereinheiten 40a bis 40m ist ferner mit der dem Betätigungselement 38 zugeordneten Schalteinheit 38' verbunden, um die Transpondereinheiten 40a bis 40m durch eine Betätigung des Schaltelements 38' zu aktivieren und/oder um eine alternative Steuerfunktion der Betätigungselemente 12 bis 36 zu bewirken. Im vorliegenden Ausführungsbeispiel haben die Transpondereinheiten 40a bis 40m denselben Aufbau wie die Transpondereinheit 40a nach Figur 2. Ferner sind die Transpondereinheiten 40a bis 40m im vorliegenden Ausführungsbeispiel jeweils als 1-Bit oder Mehr-Bit-Transpondereinheiten ausgebildet, wobei die Transpondereinheiten 40a bis 40m als passive Transponder, vorzugsweise als RFID-Transponder, ausgebildet sind. Vorzugsweise sind die Transpondereinheiten 40a bis 40m als Mehrkanaltransponder ausgebildet, um die Kollisionsmöglichkeiten bei der Abfrage der Transpondereinheiten 40a bis 40m durch eine Kommunikationseinheit bzw. Leseeinheit zu verringern. Zusätzlich oder alternativ zu der Nutzung mehrerer paralleler Übertragungskanäle können weitere Antikollisionsstrategien genutzt werden, insbesondere kann jeder auf demselben Kanal kommunizierenden Transpondereinheit 40a bis 40m ein Zeitfenster zugeordnet werden, in dem die Transpondereinheit 40a bis 40m nach einer Übertragungsanforderung durch die Leseeinheit Daten zur Leseeinheit überträgt. Im Speicher 48 können sowohl die bei verschiedenen Schaltzuständen der Schaltelemente 50 bis 64, insbesondere bei verschiedenen Schaltzuständen der Schaltelemente 60, 62, zu übertragenden Daten als auch die zur Verschlüsselung solcher Daten erforderlichen Schlüssel zur kryptographischen Verschlüsselung von zu sendenden Daten und/oder zur Entschlüsselung von empfangen Daten gespeichert sein.

Ferner ist es vorteilhaft mehrere Leseeinheiten in einem Abstand zueinander anzuordnen und den Winkel mindestens einer Transpondereinheit 40a bis 40m zu den Leseeinheiten jeweils zu bestimmen, sodass die Position der Fernbedienung 10 von einer Steuereinheit mit Hilfe der ermittelten Winkelinformationen ermittelt werden kann. Mit Hilfe der ermittelten Position kann überprüft werden, ob sich die Fernbedienung 10 in einer geeigneten Entfernung zu dem mit Hilfe der Fernbedienung 10 zu bedienenden Operationstisch und/oder zu einem anderen mit Hilfe der Fernbedienung 10 zu bedienenden medizinischen Gerätes befindet. Dadurch können unbeabsichtigte Bedienhandlungen des Operationstisches bzw. des anderen medizinischen Gerätes sicher vermieden werden.

Die Fernbedienung 10 kann in gleicher Weise für weitere medizinische Geräte und Apparate sowie für nicht medizinische Geräte und Apparate eingesetzt werden und ist nicht auf diese Anwendung beschränkt. Die Fernbedienung 10 weist vorzugsweise keine internen Energiequellen auf, insbesondere keine austauschbare Batterie und keine Akkumulatoren. Jedoch können halbaktive Transponder genutzt werden, die die zur Kommunikation mit einer Kommunikationseinheit erforderliche Energie über den Empfangskreis der Antenne 42 und die Stromversorgungsschaltung 44 zugeführt bekommen, jedoch die zum Betrieb der Transponderschaltung 64 selbst erforderliche Energie durch eine interne Energiequelle bereitstellen. Vorteilhaft ist es, sogenannte UHF-RFID-Transpondereinheiten oder andere eine ausreichende Reichweite zwischen Fernbedienung und Leseeinheit zulassende Transponder einzusetzen. Die sichere Kommunikation zwischen der Fernbedienung 10 bzw. zwischen den Transpondereinheiten 40a bis 40m und mindestens einer Leseeinheit kann durch das Vorsehen mehrerer Leseeinheiten in dem Bereich um das zu bedienende Gerät herum verbessert werden. Vorzugsweise überlappen sich die Lesebereiche der in einem Raum angeordneten Leseeinheiten, sodass an jeder Stelle des Raumes, beispielsweise eines Operationssaals, eine Kommunikation zwischen der Fernbedienung 10 und der Leseeinheit bzw. einer mit den Leseeinheiten verbundenen Steuereinheit zum Steuern des Gerätes möglich ist. Die Leseeinheiten können über Datenleitungen, vorzugsweise ein Netzwerk, wie ein LAN (Local area network), oder eine drahtlosen Datenverbindung, wie eine WLAN-Datenverbindung (wireless local network), eine Infrarot-Datenverbindung, eine Bluetooth-Datenverbindung oder eine andere geeignete Netzwerk- und/oder Datenverbindung, mit der Steuereinheit oder den Steuereinheiten des mit Hilfe der Fernbedienung 10 zu steuernden bzw. zu bedienenden Gerätes verbunden sein.

Eine eindeutige Identifizierung einer Fernbedienung und/oder eines Bedienelements kann insbesondere durch die von einer Transpondereinheit 40a bis 40m zum Lesegerät übertragene Header-Information, den sogenannten Transponder-Header, erreicht werden. Dies ist insbesondere dann hilfreich, wenn mehrere Fernbedienungen 10 im Bereich des mindestens einen Lesegerätes zum Erfassen der von der Transpondereinheit 40a bis 40m übertragenen Information und/oder mehrere Transpondereinheiten 40a bis 40m mit gleicher Funktion im Erfassungsbereich der mindestens einen Leseeinheit vorhanden sind bzw. detektiert werden. Ferner ist es auch möglich, Informationen vom Lesegerät zur Transpondereinheit 40a bis 40m zu übertragen und diese Einstellungen in der Transpondereinheit 40a bis 40m zu speichern und/oder den Informationen entsprechende Einstellungen automatisch durchzuführen und die Transpondereinheit 40a bis 40m entsprechend zu konfigurieren. Dadurch kann insbesondere die Kodierung mindestens einer Transpondereinheit 40 bis 40m an die Erfordernisse des zu bedienenden Gerätes angepasst werden.

## Patentansprüche

1. Anordnung zur drahtlosen Steuerung eines Gerätes,
mit einer Vorrichtung (10), die mindestens einen Transponder (40a bis 40m) aufweist, dem mindestens ein Betätigungselement (12 bis 36) zugeordnet ist, wobei dem Betätigungselement (12 bis 36) mindestens eine Steuerfunktion zum Steuern des Gerätes zugeordnet ist.

2. Anordnung nach Anspruch 1, **dadurch gekennzeichnet, dass** die Vorrichtung (10) mindestens zwei Transponder (40a bis 40m) aufweist, denen jeweils mindestens ein Betätigungselement (12 bis 36) zugeordnet ist, wobei jedem Betätigungselement (12 bis 36) mindestens eine Steuerfunktion zum Steuern des Gerätes zugeordnet ist.

3. Anordnung nach einem der vorhergehenden Ansprüche, **dadurch gekennzeichnet, dass** mindestens ein dem Transponder (40a bis 40m) zugeordnetes Betätigungselement (12 bis 36) den Transponder (40a bis 40m) aktiviert und/oder deaktiviert,
und/oder dass mindestens ein dem Transponder (40a bis 40m) zugeordnetes Betätigungselement (12 bis 36) die Datenübertragung des Transponders (40a bis 40m) aktiviert und/oder deaktiviert,
und/oder dass durch das Betätigungselement (12 bis 36) jeweils die mit Hilfe der Datenübertragung zwischen dem Transponder (40a bis 40m) und einer entfernt angeordneten Kommunikationseinheit übertragene Information änderbar ist.

4. Anordnung nach einem der vorhergehenden Ansprüche, **dadurch gekennzeichnet, dass** jeder Transponder (40a bis 40m) zumindest in einem Schaltzustand des jeweiligen Betätigungselements (12 bis 36) mit einer Kommunikationseinheit, vorzugsweise einer Leseeinheit, kommuniziert, wobei die Kommunikationseinheit mit einer Steuereinheit des Gerätes verbunden ist.

5. Anordnung nach einem der vorhergehenden Ansprüche, **dadurch gekennzeichnet, dass** die zumindest von den Transpondern (40a bis 40m) zur Kommunikationseinheit übertragenen Daten verschlüsselt sind.

6. Anordnung nach einem der vorhergehenden Ansprüche, **dadurch gekennzeichnet, dass** das Betätigungselement (12 bis 38) den Empfangskreis (42) mindestens eines Transponders (40a bis 40m) in einer Schaltstellung des Betätigungselements (12 bis 38) kurzschließt, wobei eine Energieversorgungseinheit zumindest die zur Kommunikation mit mindestens einer Kommunikationseinheit von dem Transponder(40a bis 40m) benötigte Energie elektrisch und/oder elektromagnetisch zum Empfangskreis (42) überträgt.

7. Anordnung nach einem der vorhergehenden Ansprüche, **dadurch gekennzeichnet, dass** zumindest zwei der Transponder (40a bis 40m) Mehrkanaltransponder sind, die wahlweise über einen der zur Verfügung stehenden Kommunikationskanäle, vorzugsweise auf voneinander verschiedenen Kommunikationskanälen, mit mindestens einer Kommunikationseinheit kommunizieren.

8. System mit einer Anordnung zur drahtlosen Steuerung eines Gerätes nach einem der vorhergehenden Ansprüche, **dadurch gekennzeichnet, dass** das System mindestens zwei in einem Abstand zueinander angeordnete Kommunikationseinheiten zur drahtlosen Kommunikation mit der Vorrichtung (10) aufweist, die jeweils mit einer Steuereinheit des Gerätes verbunden sind.

9. System nach Anspruch 8, **dadurch gekennzeichnet, dass** die Steuereinheit die Position der Vorrichtung (10) durch das Ermitteln der Position mindestens eines Transponders (40a bis 40m) der Vorrichtung (10) bestimmt, vorzugsweise mit Hilfe eines Peilverfahrens.

10. System nach Anspruch 9, **dadurch gekennzeichnet, dass** mindestens drei Kommunikationseinheiten vorgesehen sind, wobei der Abstand zwischen jeder der Kommunikationseinheiten und mindestens einem der Transponder (40a bis 40m) der Vorrichtung (10) ermittelt wird, wobei ausgehend von dem zur jeweiligen Kommunikationseinheit ermittelten Abstand eine Position der Vorrichtung (10) relativ zu den Kommunikationseinheiten bestimmt wird.

11. System nach einem der Ansprüche 8 bis 9, **dadurch gekennzeichnet, dass** die Steuereinheit des Gerätes abhängig von den von der Anordnung übertragenen Daten mindestens einen Antrieb und/oder ein Verriegelungselement des Gerätes aktiviert und/oder deaktiviert.

12. Verfahren zur drahtlosen Steuerung eines Gerätes,
bei dem Daten drahtlos zwischen mindestens einem Transponder (40a bis 40m) einer Vorrichtung (10), dem mindestens ein Betätigungselement (12 bis 36) zugeordnet ist, und mindestens einer mit einer Steuereinheit des zu steuernden Gerätes verbundenen und/oder von dieser umfassten Kommunikationseinheit übertragen werden,
beim Betätigen des Betätigungselements (12 bis 36) die Übertragung von Daten zwischen dem Transponder (40a bis 40m), dem das Betätigungselement (12 bis 36) zugeordnet ist, und der Kommunikationseinheit ermöglicht oder verhindert wird,
und bei dem beim Betätigen des dem Transponder (40a bis 40m) zugeordneten Betätigungselements (12 bis 36) mindestens eine Steuerfunktion zum Steuern des Gerätes ausgeführt wird.

13. Verfahren zur drahtlosen Steuerung eines Gerätes,
bei dem Daten drahtlos zwischen mindestens zwei Transpondern (40a bis 40m) einer Vorrichtung (10), denen jeweils mindestens ein Betätigungselement (12 bis 36) zugeordnet ist, und mindestens einer mit einer Steuereinheit des zu steuernden Gerätes verbundenen und/oder von dieser umfassten Kommunikationseinheit übertragen werden,
beim Betätigen eines Betätigungselements (12 bis 36) die Übertragung von Daten zwischen dem jeweiligen Transponder (40a bis 40m), dem das Betätigungselement (12 bis 36) zugeordnet ist, und der Kommunikationseinheit ermöglicht oder verhindert wird,
und bei dem beim Betätigen des dem jeweiligen Transponder (40a bis 40m) zugeordneten Betätigungselements (12 bis 36) jeweils mindestens eine Steuerfunktion zum Steuern des Gerätes ausgeführt wird.

14. Verfahren nach Anspruch 12 oder 13, **dadurch gekennzeichnet, dass** mindestens zwei Kommunikationseinheiten vorgesehen werden, wobei jede der Kommunikationseinheit eine Kommunikation mit mindestens einem Transponder (40a bis 40m) der Vorrichtung (10) durchführt und den Winkel und/oder die Entfernung zum Transponder (40a bis 40m) ermittelt.

15. Verfahren nach einem der vorhergehenden Ansprüche, **dadurch gekennzeichnet, dass** die Kommunikationseinheit wiederholt Daten sendet, durch die die Transponder (40a bis 40m) aufgefordert werden, Daten an die Kommunikationseinheit zu übertragen, vorzugsweise in einem festgelegten Zeitabstand nach dem Empfang der von der Kommunikationseinheit gesendeten Daten.
